# EUROPEAN PATENT APPLICATION

(11) **EP 1 892 105 A1**
(43) Date of publication of application: **27.02.2008**
(21) Application number: 07016211.0
(22) Date of filing: 17.08.2007
(51) Int. Cl.: B41J 2/21, C09D 11/00

(54) **Photocurable ink set, and printing method, printing apparatus and printed matter each using the same**

(30) Priority: 22.08.2006 JP 2006225736; 06.07.2007 JP 2007178979
(71) Applicant: Seiko Epson Corporation, Tokyo 160-0811 (JP)
(72) Inventor: Oyanagi, Takashi, Suwa-shi, Nagano-ken 392-8502 (JP); Nakano, Keitaro, Suwa-shi, Nagano-ken 392-8502 (JP)
(74) Representative: Grünecker, Kinkeldey, Stockmair & Schwanhäusser Anwaltssozietät

(57) **Abstract**

The present invention provides a photocurable ink set comprising a chromatic ink containing no photoradical polymerization initiator and an achromatic ink containing at least one or more photoradical polymerization initiators. Also disclosed are a printing method, a printing apparatus and a printed matter, each using the ink set.

## Description

### FIELD OF THE INVENTION

The present invention relates to a photocurable ink set which is cured by light, and a printing method, a printing apparatus and a printed matter each using the photocurable ink set. More specifically, the present invention relates to a photocurable ink set having excellent image curing property and forming a high-definition image, and a printing method, a printing apparatus and a printed matter each using the photocurable ink set.

### BACKGROUND OF THE INVENTION

The inkjet recording method is a printing method of flying an ink composition in the form of small droplets and attaching it onto a recording medium such as paper, thereby performing the printing. This inkjet recording method is characterized in that a high-resolution and high-quality image can be printed at a high speed. The ink composition for use in the inkjet recording method is generally prepared by using an aqueous solvent as the main component and incorporating thereinto a coloring component and a wetting agent such as glycerin for the purpose of preventing clogging.

Meanwhile, in the case of performing the printing on a recording medium like a type of paper into which the aqueous ink composition can hardly penetrate, that is, coated paper or bond paper, fabrics, or a material not allowing the penetration, such as metal and plastic, for example, a plate or film produced from a resin such as phenol, melamine, vinyl chloride, acryl and polycarbonate, the ink composition is required to contain a compound capable of stably fixing the coloring material on the recording medium.

To meet with such a requirement, a photocurable inkjet ink comprising a coloring material, a photocuring agent (radical polymerizable compound), a (photoradical) polymerization initiator and the like is disclosed (see, for example, Patent Document 1). This ink is supposed to enable preventing blurring of the ink on the recording medium and enhancing the image quality.

In order to prevent blurring of the ink and realize printing assured of high-quality image, there have been also developed, for example, a method of ejecting two liquids, that is, an ink composition and a reaction solution, on a recording medium (Patent Document 2), an inkjet recording method of mixing a photopolymerization initiator-containing reaction solution with an ink composition containing a coloring material and a polymerizable compound immediately before ejecting an ink from the ink head (Patent Document 3), and an inkjet recording method of ejecting a photocurable ink having a small coloring material content on a recording material and then ejecting a coloring material-containing photocurable ink (Patent Document 4).

Patent Document 1: U.S. Patent 5,623,001
Patent Document 2: JP-A-2000-158793
Patent Document 3: JP-A-2003-89261
Patent Document 4: JP-A-2005-96254

The two-component mixing-type photocurable ink has a problem that when two liquids are mixed, the coloring material concentration becomes 1/2 and insufficient color density results. This effect is particularly prominent in the achromatic ink, and visibility in the black ink and masking property in the white ink are inevitably reduced.

Also, elevation of the coloring material concentration in the ink composition in expectation of that it becomes 1/2 is liable to cause an increase in the energy required for photocuring and incur a curing failure. Particularly, carbon black which is a pigment contained in the black ink strongly absorbs visible light and ultraviolet light and therefore, increase in the pigment concentration incurs an increase in the irradiation energy and in turn, an increase in the load of the curing process, as a result, the apparatus becomes large-sized and the process time increases.

In the case where the amount of the photopolymerization initiator is small, the radical polymerization may not sufficiently proceed, insufficient curing may result, and an unreacted monomer may remain. Also in the case of elevating the photopolymerization initiator concentration in the ink composition in expectation of that it becomes 1/2 as well, the storage stability (pot life) may be deteriorated, or the produced reaction product may have an insufficiently increased polymerization degree, failing to attain complete curing. This is considered to occur because the number of monomers becomes small relative to radicals generated from the potopolymerization initiator and hence the radical polymerization product does not grow to a polymer and grows no further than an oligomer. Particularly, in the case of a chromatic ink, when the polymerization degree of the cured product differs depending on the color, there arises a problem that the image formed suffers from a trouble such as generation of color bleeding or aggregation of coloring materials.

### SUMMARY OF THE INVENTION

Under these circumstances, an object of the present invention is to overcome those problems in the conventional techniques and provide a photocurable ink set having excellent image curing property and forming a high-definition image.
Other objects of the present invention are to provide a printing method, a printing apparatus and a printed matter, each using the ink set.
Still other objects of the present invention will become apparent from the following description.

The present inventors have made intensive studies, as a result, the above-described objects have been attained by employing the following constructions, thereby making the present invention.

That is, the present invention is as follows.
(1) A photocurable ink set comprising a chromatic ink containing no photoradical polymerization initiator and an achromatic ink containing at least one photoradical polymerization initiator.
(2) The photocurable ink set as described in (1), wherein the achromatic ink comprises a black ink, a white in, a gray ink, a light black ink and a clear ink.
(3) The photocurable ink set as described in (1) or (2), wherein the white ink comprises a hollow resin.
(4) The photocurable ink set as described in any one of (1) to (3), wherein the chromatic ink comprises at least one ink selected from the group consisting of: a yellow ink, a magenta ink, a cyan ink; light-colored inks thereof, i.e., a light yellow ink, a light magenta ink and a light cyan ink; and intermediate color inks such as a red ink, a green ink, a blue ink, an orange ink, a brown ink and a violet ink.
(5) A printing method using the photocurable ink set described in any one of (1) to (4).
(6) The printing method as described in (5), wherein the achromatic ink is cured singly.
(7) The printing method as described in (5), wherein the achromatic ink is cured through mixing it with another achromatic ink.
(8) The printing method as described in any one of (5) to (7), wherein the chromatic ink is cured through mixing it with the achromatic ink.
(9) A printing apparatus using the photocurable ink set described in any one of (1) to (4).
(10) A printed matter which is printed using the photocurable ink set described in any one of (1) to (4).

### DETAILED DESCRIPTION OF THE INVENTION

The photocurable ink set of the present invention is described in detail below. The photocurable ink set of the present invention is characterized by comprising a chromatic ink containing no photoradical polymerization initiator and an achromatic ink containing at least one or more photoradical polymerization initiators.

The photoradical polymerization initiator for use in the chromatic ink and achromatic ink of the present invention is not particularly limited but is preferably an α-aminoketone, an α-hydroxyketone or an acylphosphine oxide, and examples thereof include an α-hydroxyalkyl-phenone, an α-aminoalkylphenone, a monoacylphosphine oxide and a bisacylphosphine oxide.

Furthermore, photoradical polymerization initiators available under the trade names of Irgacure 127, 184, 2959, 369, 379, 907, 1700, 1800, 1850, 1870, 819, 4265, Darocur 1173 and TPO (produced by Ciba Specialty Chemicals K.K.) may also be used.
The amount of the photoradical polymerization initiator to be added is preferably from 0.1 wt% to 15 wt%, more preferably from 0.5 wt% to 10 wt%, based on the ink composition. If the amount is excessively small, the polymerization rate is lowered, thereby resulting in an enlarged effect of oxygen inhibition and hence a curing failure. If the amount is excessively large, it can be obtained only a cured product having a low molecular weight and poor durability.

The photoradical polymerizable compound for use in the chromatic ink and achromatic ink of the present invention is not particularly limited as long as it is a compound usually used for a photocurable ink, but the photoradical polymerizable compound is preferably an allyl compound, more preferably an allyl ether compound, an ethylene glycol monoallyl ether, a trimethylolpropane diallyl ether, trimethylolpropane monoallyl ether, a glycerin monoallyl ether, an allyl glycidyl ether or a pentaerythritol triallyl ether, still more preferably an ethylene glycol monoallyl ether, a trimethylolpropane diallyl ether and/or an N-vinyl compound, yet still more preferably an N-vinylformamide.

The ethylene glycol monoallyl ether and/or N-vinylformamide are a monofunctional radical polymerizable monomer and are preferred because undesired polymerization due to a dark reaction during storage less occurs.
In particular, an allyl ether compound such as ethylene glycol monoallyl ether and trimethylolpropane diallyl ether is not polymerized by itself even in the presence of a carbon radical generated upon decomposition of the photoradical polymerization initiator.

If the amount added of the ethylene glycol monoallyl ether and/or N-vinylformamide is less than 20 wt%, there arises a problem in the viscosity, dispersion stability, storage stability and the like of the ink composition, whereas if it exceeds 80 wt%, on use as a two-component type photocurable ink composition, the curability and film strength may become insufficient. The amount added is preferably from 20 to 70 wt%.

In the chromatic ink and achromatic ink of the present invention, a dendritic polymer is sometimes contained as a photoradical polymerizable compound. The dendritic polymers can be roughly classified into the following 6 structures.
I. Dendrimer
II. Linear dendritic polymer
III. Dendrigraft polymer
IV. Hyperbranch polymer
V. Star hyperbranch polymer
VI. Hypergraft polymer

Of these, I to III have a degree of branching (DB) of 1 and have a defect-free structure, whereas IV to VI have a random branch structure which may contain a defect. In particular, the dendrimer allows reactive functional groups to be arranged on the outermost surface thereof at a high density in a concentrated manner as compared with a linear polymer generally used and is highly promising as a functional polymer material. Also, the hyperbranch polymer allows a large number of reactive functional groups to be introduced into the outermost surface thereof, though not so many as the dendrimer, and is excellent in the curability.

Unlike conventional linear polymers or branched polymers, these dendritic polymers are highly branched by three-dimensionally repeating a branched structure, so that the viscosity can be kept low as compared with a linear polymer having the same molecular weight.

The dendrimer and hyperbranch polymer usable in the present invention are preferably a dendritic polymer which is solid at room temperature and has a number average molecular weight of 1,000 to 100,000, more preferably from 2,000 to 50,000. If the molecular weight is less than this range, the fixed image becomes brittle, whereas if the molecular weight exceeds the range above, the ink comes to have an excessively high viscosity even when the amount added of the dendritic polymer is decreased, and this is impractical in view of ejection property.

The dendrimer and hyperbranch polymer usable in the present invention are preferably a dendrimer and a hyperbranch polymer each having a radical polymerizable functional group on the outermost surface. By virtue of the radical polymerizable structure on the outermost surface, the polymerization reaction swiftly proceeds.

Examples of the polymer having a dendrimer structure include amidoamine-based dendrimers described in U.S. Patents 4,507,466, 4,558,120, 4,568,737, 4,587,329, 4,631,337 and 4,694,064, and phenyl ether-based dendrimers described in U.S. Patent 5,041,516 and Journal of American Chemistry, Vol. 112, pp. 7638-7647 (1990). As for the amidoamine-based dendrimer, a dendrimer having a terminal amino group and a carboxylic acid methyl ester group is commercially available as "Starburst^{™} (PAMAM)" from Aldrich. Also, amidoamine-based dendrimers having a corresponding terminal may be synthesized by reacting the terminal amino group of the amidoamine-based dendrimer with various acrylic acid derivatives and methacrylic acid derivatives, and these may be used.

The acrylic acid derivative and methacrylic acid derivative which can be utilized include, but are not limited to, acrylic or methacrylic acid alkyl esters of methyl, ethyl, n-butyl, tert-butyl, cyclohexyl, palmityl, stearyl and the like, and acrylic or methacrylic acid alkylamides of acrylic acid amide, isopropylamide and the like.

As for the phenyl ether-based dendrimer, various compounds are described in Journal of American Chemistry, Vol. 112, pp. 7638-7647 (1990), and it is reported that, for example, a 3,5-dihydroxybenzyl alcohol is used and reacted with 3,5-diphenoxybenzyl bromide to synthesize a second-generation benzyl alcohol, this alcohol after converting its OH group into Br by using CBr₄ and triphenylphosphine is similarly reacted with a 3,5-dihydroxybenzyl alcohol to synthesize a next-generation benzyl alcohol, and these reactions are thereafter repeated to synthesize a desired dendrimer. Also in the phenyl ether-based dendrimer, the terminal can be substituted by those having various chemical structures in place of the terminal benzyl ether bond. For example, in the synthesis of the dendrimer described in Journal of American Chemistry, Vol. 112, pp. 7638-7647 (1990), when various alkyl halides are used in place of the benzyl bromide, phenyl ether-based dendrimers having a terminal structure with a corresponding alkyl group can be obtained. In addition, as for the polyamine-based dendrimer, polyamine-based dendrimers described in Macromol. Symp., 77, 21 (1994)) and derivatives obtained by modifying the terminal group of these dendrimers can be used.

Examples of the hyperbranch polymer which can be used include hyperbranch polyethylene glycol. The hyperbranch polymer is a polymer obtained by synthesizing a target polymer in one step using a monomer having two or more single-species reaction points corresponding to branch portions and only one different-species reaction point corresponding to the connecting portion within one molecule (Macromolecules, Vol. 29, pp. 3831-3838 (1996)). Examples of the monomer for the hyperbranch polymer include a 3,5-dihydroxybenzoic acid derivative. As for the production example of the hyperbranch polymer, poly[bis(triethylene glycol) benzoate] which is a hyperbranch polymer can be synthesized by heating, in a nitrogen atmosphere, dibutyltin diacetate and methyl 3,5-bis((8'-hydroxy-3',6'-dioxaoctyl)oxy)benzoate which is a hydrolysate of methyl 3,5-bis((8'-(tert-butyldiphenylsiloxy)-3',6'-dioxaoctyl)-oxy)benzoate obtained from 1-bromo-8-(tert-butyldiphenyl-siloxy)-3,6-dioxaoctane and methyl 3,5-dihydroxybenzoate.

In the case of using a 3,5-dihydroxybenzoic acid, the terminal group of the hyperbranch polymer becomes a hydroxyl group and therefore, hyperbranch polymers having various terminal groups can be synthesized using an appropriate alkyl halide for this hydroxyl group.

The characteristics of a monodisperse polymer having a dendrimer structure, a hyperbranch polymer or the like are governed by the chemical structure of the main chain and the chemical structure of its terminal group. The characteristics are greatly varied particularly by the difference of the terminal group or the substituent in the chemical structure. In particular, a dendrimer having a polymerizable group at the terminal provides a high gelling effect after photoreaction because of its reactivity and therefore, is useful. The polymerizable group-containing dendrimer is obtained by chemically modifying the terminal of a polymer having a basic atomic group such as amino group, substituted amino group or hydroxyl group at the terminal, with a polymerizable group-containing compound.

For example, the polymerizable group-containing dendrimer is synthesized by adding an isocyanate group-containing vinyl compound or the like to a polyfunctional compound obtained by the Michael addition of an active hydrogen-containing (meth)acrylate-based compound to an amino-based dendrimer. Also, the dendrimer having a polymerizable group at the terminal is obtained by reacting (meth)acrylic acid chloride or the like with an amino-based dendrimer. The vinyl compound which gives such a polymerizable group includes a compound having a radical polymerizable ethylenically unsaturated double bond, and examples thereof include an unsaturated carboxylic acid such as acrylic acid, methacrylic acid, itaconic acid, crotonic acid, isocrotonic acid and maleic acid, a salt thereof, and various radical polymerizable ethylenically unsaturated bond-containing compounds described later.

In the present invention, one of the dendrimers and hyperbranch polymers described above may be used alone, or the dendrimer or hyperbranch polymer may be used in combination with another kind of dendrimer or hyperbranch polymer.
The dendrimer has high stereoregularity and requires a large number of production steps, giving rise to a high cost, but the stereoregularity of the hyperbranch polymer is not so high and this polymer can be relatively easily synthesized and is advantageous in view of cost.
In the present invention, "Viscoat #1000" and "STAR-501" produced by Osaka Organic Chemical Industry, Ltd. are used as the hyperbranch polymer. "Viscoat #1000" and "STAR-501" are a hyperbranch polymer obtained by branching functional groups from dipentaerythritol as the core. "Viscoat #1000" contains ethylene glycol diacrylate as the diluent monomer and has a viscosity of 273 mPa•s and a functional group number of 14 (acryl group), and "STAR-501" contains dipentaerythritol hexaacrylate as the diluent monomer and has a viscosity of 210 mPa•s and a functional group number of 20 to 99 (acryl group). Both polymers have an acryloyl group on the outermost surface and can be suitably used.

In the chromatic ink and achromatic ink of the present invention, the amount added of the dendritic polymer is preferably on the order of 3 to 30 wt% and within this range, the suitability as a two-component type photocurable ink composition set can be maintained. The amount added is more preferably on the order of 5 to 25 wt%. If the amount added of the dendritic polymer is less than 3 wt%, the curability on use as a two-component type photocurable ink set is insufficient, whereas if it exceeds 30 wt%, there may arise a problem in the viscosity, dispersion stability, storage stability and the like of the ink.

The other radical polymerizable compound is not particularly limited but includes, for example, a monomer.

The monomer means a molecule capable of becoming a constituent unit of the basic structure of a polymer. The monomer for use in the present invention is also called a photopolymerizable monomer and includes a monofunctional monomer, bifunctional monomer and a polyfunctional monomer, and these all can be used. These monomers all preferably have a PII value (primary irritation index) of 2 or less.

Examples of the monofunctional monomer, bifunctional monomer and polyfunctional monomer having a PII value of 2 or less, which can be used in the present invention, are shown in Table 1 below.

**Table 1**

| Monofunctional Monomer | | |
|---|---|---|
| Material Name | Viscosity (mPa•s) | P.I.I. |
| (2-Methyl-2-ethyl-1,3-dioxolan-4-yl)methyl acrylate (MEDOL-10, Osaka Organic Chemical Industry Ltd.) | 5.1 | 1.3 |
| (2-Methyl-2-isobutyl-1,3-dioxolan-4-yl)methyl acrylate (MIBDOL-10, Osaka Organic Chemical Industry Ltd.) | 5.3 | 1.0 |
| Phenoxyethyl acrylate (Viscoat #192, Osaka Organic Chemical Industry Ltd.) | 3.3 | 1.7 |
| Isobornyl acrylate (IBXA, Osaka Organic Chemical Industry Ltd.) | 2.6 | 0.6 |
| Methoxydiethylene glycol monoacrylate (Blemmer PME-100, NOF Corp.) | 2 | 0.7 |
| Acryloyl morpholine (ACMO, Kohjin Co., Ltd.) | 12 | 0.5 |

| Bifunctional Monomer | | |
|---|---|---|
| Material Name | Viscosity (mPa•s) | P.I.I. |
| Ethylene glycol dimethacrylate (Light-Ester EG, Kyoeisha Chemical Co., Ltd.) | 3 | 0.6 |
| Diethylene glycol dimethacrylate (Light-Ester 2EG, Kyoeisha Chemical Co., Ltd.) | 5 | 0.5 |
| Tripropylene glycol diacrylate (Aronix M-220, Toagosei Co., Ltd.) | 12 | 1.6 |
| 1,9-Nonanediol diacrylate (Viscoat #260, Osaka Organic Chemical Industry Ltd.) | 21 | 2.0 |
| Polyethylene glycol #400 diacrylate (NK Ester A400, Shin-Nakamura Chemical Co., Ltd.) | 58 | 0.4 |
| Tetraethylene glycol dimethacrylate (NK Ester 4G, Shin-Nakamura Chemical Co., Ltd.) | 14 | 0.5 |
| 1,6-Hexanediol dimethacrylate (NK Ester HD-N, Shin-Nakamura Chemical Co., Ltd.) | 6 | 0.5 |
| Neopentyl glycol dimethacrylate (NK Ester NPG, Shin-Nakamura Chemical Co., Ltd.) | 7 | 0.0 |
| 2-Hydroxy-1,3-dimethacryloxypropane (NK Ester 701, Shin-Nakamura Chemical Co., Ltd.) | 37 | 0.6 |
| 1,4-Butanediol dimethacrylate (BD, Shin-Nakamura Chemical Co., Ltd.) | 7 | 2.0 |

| Polyfunctional Monomer | | |
|---|---|---|
| Material Name | Viscosity (mPa•s) | P.I.I. |
| Trimethylolpropane trimethacrylate (NK Ester TMPT, Shin-Nakamura Chemical Co., Ltd.) | 42 | 0.8 |
| Trimethylolpropane modified triacrylate (Viscoat #360, Osaka Organic Chemical Industry Ltd.) | 55 | 1.5 |
| Trimethylolpropane PO modified triacrylate (New Frontier TMP-3P, Dai-Ichi Kogyo Seiyaku Co., Ltd.) | 60 | 0.1 |
| Glycerin PO modified triacrylate (Viscoat #GPT, Osaka Organic Chemical Industry Ltd.) | 75 | 0.8 |

In the Table above, the viscosity is the measured value at 25°C.

In the chromatic ink and achromatic ink of the present invention, a surfactant can be used and, for example, as the silicone-based surfactant, a polyester-modified silicone or a polyether-modified silicone is preferred, and a polyether-modified polydimethylsiloxane or a polyester-modified polydimethylsiloxane is more preferred. Specific examples thereof include BYK-347, BYK-348, BYK-UV3500, 3510, 3530 and 3570 (produced by BYK-Chemie Japan K.K.).

In the chromatic ink and achromatic ink of the present invention, a polymerization accelerator may be contained. The polymerization accelerator is not particularly limited but any one or more of an amine compound, thioxanthone and a polymerizable fine particle are preferably contained, and examples thereof include Darocur EHA and EDB (produced by Ciba Specialty Chemicals K.K.), which are aminobenzoate available on the market, thioxanthone, isopropylthioxanthone, dimethylthioxanthone, diethylthioxanthone, and a polymerizable fine particle having introduced into the surface thereof a polymerizable functional group.
Also, for the purpose of efficiently using the irradiated light in the polymerization reaction, a sensitizer may be added. Examples of the sensitizer include coumarin-based, cyanine-based and anthracene-based coloring matter derivatives.

The chromatic ink and achromatic ink of the present invention each preferably contains a thermal radical polymerization inhibitor. By containing this, the storage stability of the ink composition is enhanced. As for the thermal radical polymerization inhibitor, those blended in a general polymerizable composition can be used, and examples thereof include a phenol-based antioxidant, a hindered phenol compound, a hindered amine light stabilizer (HALS), a phosphorus-based antioxidant, and a hydroquinone monomethyl ether which is widely used in (meth)acryl monomers, and further include hydroquinone, tert-butyl catechol and pyrogallol. A hindered phenol compound and an HALS-based compound are preferred. Examples thereof include Irgastab UV-22 and Irgastab UV-10 (produced by Ciba Specialty Chemicals K.K.) as the hindered phenol compound and the HALS-based compound, respectively.

Examples of the chromatic ink of the present invention include: a yellow ink, a magenta ink, a cyan ink; their light-colored inks, i.e., a light yellow ink, a light magenta ink and a light cyan ink; and intermediate color inks such as a red ink, a green ink, a blue ink, an orange ink, a brown ink and a violet ink.

Examples of the achromatic ink of the present invention include a black ink, a white ink, a gray ink, a light black ink and a clear ink. The clear ink is a colorless transparent ink not containing a coloring material.

The coloring material to be used in the chromatic ink and achromatic ink of the present invention is preferably a pigment in view of durability of the printed matter.

With respect to the pigment used in the present invention, an inorganic pigment and an organic pigment can be used without any particular limitation.

As for the inorganic pigment, in addition to titanium oxide and iron oxide, carbon black produced by a known process such as contact process, furnace process and thermal process can be used. As for the organic pigment, an azo pigment (including an azo lake, an insoluble azo pigment, a condensed azo pigment, a chelate azo pigment and the like), a polycyclic pigment (e.g., phthalocyanine pigment, perylene pigment, perynone pigment, anthraquinone pigment, quinacridone pigment, dioxazine pigment, thioindigo pigment, isoindolinone pigment, quinophthalone pigment), a dye chelate (e.g., basic dye type chelate, acid dye type chelate), a nitro pigment, a nitroso pigment, aniline black and the like can be used.

Specific examples of the pigment include, as carbon black, C.I. Pigment Black 7; No. 2300, No. 900, MCF88, No. 33, No. 40, No. 45, No. 52, MA7, MA8, MA100 and No. 2200B produced by Mitsubishi Chemical Corp.; Raven 5750, Raven 5250, Raven 5000, Raven 3500, Raven 1255 and Raven 700 produced by Columbia; Regal 400R, Regal 330R, Regal 660R, Mogul L, Mogul 700, Monarch 800, Monarch 880, Monarch 900, Monarch 1000, Monarch 1100, Monarch 1300 and Monarch 1400 produced by Cabot; and Color Black FW1, Color Black FW2, Color Black FW2V, Color Black FW18, Color Black FW200, Color Black S150, Color Black S160, Color Black S170, Printex 35, Printex U, Printex V, Printex 140U, Special Black 6, Special Black 5, Special Black 4A and Special Black 4 produced by Degussa.

Examples of the pigment used in, the white ink include titanium dioxide, calcium carbonate, calcium sulfate, zinc oxide, barium sulfate, barium carbonate, silica, alumina, kaolin, clay, talc, white clay, aluminum hydroxide and magnesium carbonate. The pigment is preferably one member selected from the group consisting of these pigments, or a mixture of two or more members thereof.
A white hollow resin having a smaller specific gravity than the inorganic pigment such as titanium dioxide may also be used and is preferably used by mixing it with the inorganic pigment above. As for such a white hollow resin, those available on the market can be used and examples of the commercial product which can be suitably used include "Ropaque OP-84J", "Ropaque OP-62" and "Ropaque HP-91" produced by Rohm and Haas Company; "SX863A" and "SX866B" produced by JSR Corp.; "Boncoat", "Grandol PP-1000", "Grandol PP-1001" and "Grandol PP-2000" produced by Ink Kagaku Sha; and "Latex SBL8801" produced by Asahi Kasei Kogyo K.K.

Examples of the pigment used in the yellow ink include C.I. Pigment Yellow 1, 2, 3, 12, 13, 14, 16, 17, 73, 74, 75, 83, 93, 95, 97, 98, 109, 110, 114, 120, 128, 129, 138, 139, 150, 151, 154, 155, 180, 185 and 213.

Examples of the pigment used in the magenta ink includes C.I. Pigment Red 5, 7, 12, 48(Ca), 48(Mn), 57(Ca), 57:1, 112, 122, 123, 168, 184, 202 and 209, and C.I. Pigment Violet 19.

Examples of the pigment used in the cyan ink include C.I. Pigment Blue 1, 2, 3, 15:3, 15:4, 60, 16 and 22.

Other chromatic inks are prepared by mixing the inks above, or a pigment in general use can be used therefor.

The pigment which can be used in the metallic ink is not particularly limited, but examples thereof include those obtained by using a composite pigment original having a structure that a resin layer for release and a metal or alloy layer are sequentially stacked on a sheet-like substrate surface, or a structure that a resin layer for release, a metal or alloy layer and a silicon dioxide layer are sequentially stacked, and by separating the metal or alloy layer from the sheet-like substrate at the boundary on the interface with the resin layer for release and grinding the separated layer.

The metal to be used for the metal or metal alloy layer of the composite pigment original for the production of the metal flakes is not particularly limited as long as it has a function such as having metallic luster, but examples thereof include aluminum, silver, gold, nickel, chromium, tin, zinc, indium, titanium and copper. At least one species of these simple metals, metal alloys thereof, and mixtures thereof is used. Also, for adjusting the color tone of the pigment, pigments of respective colors may be mixed with each other. For example, for the purpose of changing the color tone of red-tinged black to be blue-tinged, Pigment Black 7 and Pigment Blue 15:3 may be mixed. At the same time, a fluorescent brightening agent may also be added.

According to a preferred embodiment of the present invention, the average particle diameter of the inorganic/organic pigment is preferably from 10 to 200 nm, more preferably from 50 to 150 nm. The metallic pigment is preferably a metal flake where the average thickness is from 15 to 100 nm, the 50% volume average particle diameter is from 1.0 to 4.0 µm, preferably from 1.0 to 2.0 µm, and the maximum particle diameter in the particle size distribution is 12 µm or less, preferably 5 µm or less.
The amount of the coloring material to be added is preferably within the range of about 0.1 to 25 wt%, more preferably within the range of about 0.5 to 15 wt%, based on the ink composition.

According to a preferred embodiment of the present invention, such a pigment can be used as the chromatic ink or achromatic ink by dispersing it in an aqueous medium with use of a dispersant or a surfactant to obtain a pigment liquid dispersion. As for the preferred dispersant, a dispersant conventionally used for preparing a pigment liquid dispersion, such as polymer dispersant, can be used.

In the photocurable ink set of the present invention, when the ink contains a coloring material, the ink set may comprise a plurality of coloring material-containing inks for each color. For example, in the case of adding a dark or light color of the same series every each color in addition to the basic four colors of yellow, magenta, cyan and black, there may be used light magenta (light color) or red (dark color) in addition to magenta, and light cyan (light color), blue or violet (dark color) in addition to cyan. Also, gray or orange which are intermediate colors may be used. Furthermore, gray, light black (light color) or mat black (dark color) in addition to achromatic black, and cream or ivory in addition to achromatic white, may be used. In the case of metallic color, silver, gold, copper, chrome silver or the like may be used.

If desired, a leveling additive, a matting agent, and a polyester-based resin, polyurethane-based resin, vinyl-based resin, acrylic resin, rubber-based resin, polyacryl polyol resin, polyoxyalkylene polyalkyleneamine resin or waxes for adjusting the film physical properties may be added. Also, in the ink of the present invention, other conventionally known and employed components which can be used in the two-component type photocurable ink, such as wetting agent, penetrating solvent, pH adjusting agent, antiseptic and antifungal, may be added.

The chromatic ink of the present invention can be cured by mixing it with an achromatic ink and is often mixed particularly with a clear ink. The achromatic ink of the present invention can be cured singly, and the method for curing the achromatic ink includes three cases, that is, a case of curing the achromatic ink singly, a case of mixing achromatic inks with each other, and a case of mixing it with a chromatic ink. In the black ink requiring visibility or the white ink requiring masking property, the achromatic ink is preferably cured singly.

In the photocurable ink set of the present invention, in the case of mixing two kinds of inks, the curing reaction is preformed by irradiating light after the mixing. The mixing may be performed either before or after printing as long as it is before the curing reaction. In other words, the mixing and printing may be performed in a mode where two kinds of inks are attached to the same position of a recording medium and then mixed on the recording medium, or a mode where two kinds of inks are mixed and then attached on a recording medium.

An inkjet recording method serving as the printing method using the photocurable ink composition set of the present invention is a method of ejecting the ink composition on a recording medium and thereafter irradiating an ultraviolet ray.

The irradiation light source is not particularly limited but is preferably an irradiation light source which emits light at a wavelength of 350 to 450 nm. The irradiation dose of ultraviolet ray is from 10 to 20,000 mJ/cm², preferably from 50 to 15,000 mJ/cm². When the irradiation dose of ultraviolet ray is within such a range, the curing reaction can be sufficiently performed.

The ultraviolet irradiation means includes a lamp such as metal halide lamp, xenon lamp, carbon arc lamp, chemical lamp, low-pressure mercury lamp and high-pressure mercury lamp. A commercially available lamp such as H Lamp, D Lamp and V Lamp manufactured by Fusion System may also be used.

Furthermore, the ultraviolet irradiation can be performed using an ultraviolet light-emitting semiconductor element such as ultraviolet light-emitting diode (ultraviolet LED) and ultraviolet light-emitting semiconductor laser.

The desired recording can be effected on a recording medium by an inkjet recording apparatus serving as the printing apparatus using the photocurable ink set of the present invention.

Also, a printed matter having formed thereon at least a part of an image can be formed using the photocurable ink set of the present invention. The material for the printed matter is not particularly limited.

### EXAMPLES

The present invention will be illustrated in greater detail with reference to the following Examples, but the invention should not be construed as being limited thereto. Incidentally, in the Tables below, the blending amounts of components are given in terms of wt%.
Preparation of Black Ink Composition 1 (Bk1):
Black Ink Composition 1 according to the formulation shown in Table 2 below was prepared. The preparation was performed as follows. 15 Parts by weight of C.I. Pigment Black 7, 5 parts by weight of polyoxyalkylene-added polyalkyleneamine (Discol N-518, produced by Dai-ichi Kogyo Seiyaku Co., Ltd.) as the dispersant and 80 parts by weight of ethylene glycol monoallyl ether (hereinafter simply referred to as AG) were mixed with stirring, and the resulting mixture was dispersed together with zirconia beads (diameter: 1.5 mm) by using a sand mill (manufactured by Yasukawa Seisakusho) for 6 hours. Thereafter, zirconia beads were separated by a separator to obtain Pigment Liquid Dispersion A.
Subsequently, out of the blend components shown in Table 2 below, the solvent and various additives except for AG, pigment and dispersant were mixed and completely dissolved to prepare an ink solvent, and Pigment Liquid Dispersion A obtained above was gradually added dropwise to the ink solvent under stirring. After the completion of dropwise addition, these were mixed with stirring at ordinary temperature for 30 minutes, and the resulting mixture was filtered through a 5-µm membrane filter to prepare Black Ink Composition 1 shown below.

**Table 2**

| | Black Ink 1 (Bk1) | Clear Ink 1 (CL1) | Black Ink 2 (Bk2) | Black Ink 3 (Bk3) | Black Ink 4 (Bk4) |
|---|---|---|---|---|---|
| C.I. Pigment Black 7 | 6.0 | - | 3.0 | 9.0 | 6.0 |
| N-518 | 2.0 | - | 1.0 | 3.0 | 2.0 |
| NVF | 25.0 | 25.0 | 25.0 | 25.0 | 25.0 |
| AG | 47.6 | 53.6 | 49.6 | 43.6 | 55.6 |
| STAR-501 | 10.0 | 15.0 | 12.0 | 10.0 | 10.0 |
| BYK-3570 | 0.2 | 0.2 | 0.2 | 0.2 | 0.2 |
| Irgacure 819 | 6.4 | 4.0 | 6.4 | 6.4 | - |
| Irgacure 369 | 1.6 | - | 1.6 | 1.6 | - |
| Irgacure 127 | - | 1.0 | - | - | - |
| Darocur EDB | 1.0 | 1.0 | 1.0 | 1.0 | 1.0 |
| Irgastab UV-10 | 0.2 | 0.2 | 0.2 | 0.2 | 0.2 |

### Preparation of Colorless Transparent Ink (Clear Ink) Composition 1 (CL1):

The blend components shown in Table 2 were mixed and completely dissolved, and the resulting solution was mixed with stirring at ordinary temperature for 30 minutes and then filtered through a 5-µm membrane filter to prepare Colorless Transparent Ink (Clear Ink) Composition 1 shown in Table 2.

### Preparation of Black Ink Compositions 2 to 4 (Bk2 to Bk4):

Black Ink Compositions 2 to 4 were prepared each to have the formulation shown in Table 2 by the same operation as Black Ink Composition 1 (Bk1).

### Preparation of White Ink Composition 1 (W1):

### Production of Titanium Dioxide Fine Particle:

A titanium-containing ore was dissolved with sulfuric acid to obtain a titanium sulfate solution. This titanium sulfate solution was hydrolyzed and to the resulting hydrated titanium oxide, 0.50 parts by weight of ammonium phosphate, 0.30 parts by weight of potassium sulfate and 0.30 parts by weight of aluminum sulfate were added per 100 parts by weight in terms of TiO₂. Thereafter, the hydrated titanium oxide was heated in a laboratory rotary muffle furnace until the product temperature became 1,020°C, and the titanium dioxide fine particle produced was cooled to room temperature and observed through a transmission electron microscope, as a result, the particle was found to be anatase titanium dioxide having a primary particle diameter of 0.13 µm. 15 Parts by weight of this surface-treated titanium dioxide fine particle as the white pigment, 5 parts by weight of polyoxyalkylene-added polyalkyleneamine (Discol N-518, produced by Dai-ichi Kogyo Seiyaku Co., Ltd.) as the dispersant and 80 parts by weight of ethylene glycol monoallyl ether (hereinafter, simply referred to as AG) were mixed, and the resulting slurry was dispersed for 2 hours in a sand mill (produced by Yasukawa Seisakusho) filled with zirconium beads (diameter: 1.0 mm) in an amount of 1.5 times the slurry. Thereafter, the beads were removed to obtain a 60 wt% monomer liquid dispersion of titanium dioxide fine particle (C.I. Pigment White 6). The subsequent operation was performed in the same manner as Black Ink Composition 1, whereby White Ink Composition 1 was prepared to have the formulation shown in Table 3 below.

**Table 3**

| | White Ink 1 (W1) | White Ink 2 (W2) | White Ink 3 (W3) | White Ink 4 (W4) |
|---|---|---|---|---|
| C.I. Pigment White 6 | 6.0 | 3.0 | 9.0 | 6.0 |
| N-518 | 2.0 | 1.0 | 3.0 | 2.0 |
| NVF | 25.0 | 25.0 | 25.0 | 25.0 |
| AG | 47.6 | 49.6 | 43.6 | 55.6 |
| STAR-501 | 10.0 | 12.0 | 10.0 | 10.0 |
| BYK-3570 | 0.2 | 0.2 | 0.2 | 0.2 |
| Irgacure 819 | 6.4 | 6.4 | 6.4 | - |
| Irgacure 369 | - | 1.6 | 1.6 | - |
| Irgacure 127 | 1.6 | - | - | - |
| Darocur EDB | 1.0 | 1.0 | 1.0 | 1.0 |
| Irgastab UV-10 | 0.2 | 0.2 | 0.2 | 0.2 |

### Preparation of White Ink Compositions 2 to 4 (W2 to W4):

White Ink Compositions 2 to 4 were prepared each to have the formulation shown in Table 3 by the same operation as White Ink Composition 1 (W1).

### Preparation of Black Ink Composition 5 (Bk5) and White Ink Composition 5 (W5):

Black Ink Composition 5 and White Ink Composition 5 each having the blend formulation shown in Table 4 below were prepared in the same manner as Black Ink Composition 1 (Bk1).

### Preparation of Black Ink Composition 6 (Bk6):

Black Ink Composition 6 according to the blend formulation shown in Table 5 below was prepared in the same manner as Black Ink Composition 1 (Bk1) except for not using the photoradical polymerization initiator.

### Preparation of White Ink Composition 6 (W6):

White Ink Composition 6 according to the blend formulation shown in Table 5 below was prepared in the same manner as White Ink Composition 1 (W1) except for not using the photoradical polymerization initiator.

**Table 4**

| | Black Ink 5 (Bk5) | White Ink 5 (W5) |
|---|---|---|
| Pigment | C.I. Black 7 | C.I. White 6 |
| | 6.0 | 9.0 |
| N-518 | 2.0 | 3.0 |
| NVF | 25.0 | - |
| AG | 47.6 | 58.6 |
| V #1000 | 14.0 | 25.0 |
| BYK-3570 | 0.2 | 0.2 |
| Irgacure 819 | 3.2 | 3.2 |
| Irgacure 369 | 0.8 | - |
| Irgacure 127 | - | 0.8 |
| Darocur EDB | 1.0 | - |
| Irgastab UV-10 | 0.2 | 0.2 |

**Table 5**

| | Black Ink 6 (Bk6) | White Ink 6 (W6) |
|---|---|---|
| Pigment | C.I. Black 7 | C.I. White 6 |
| | 6.0 | 9.0 |
| N-518 | 2.0 | 3.0 |
| NVF | 25.0 | - |
| AG | 51.6 | 62.6 |
| V #1000 | 14.0 | 25.0 |
| BYK-3570 | 0.2 | 0.2 |
| Darocur EDB | 1.0 | - |
| Irgastab UV-10 | 0.2 | 0.2 |

The compounds shown in the Tables indicate the followings.
N-518:
   Polyoxyalkylene-added polyalkyleneamine (Discol N-518, produced by Dai-ichi Kogyo Seiyaku Co., Ltd.)
NVF:
   N-Vinylformamide (produced by Arakawa Chemical Industries, Ltd.)
AG:
   Ethylene glycol monoallyl ether (produced by Nippon Nyukazai Co., Ltd.)
STAR-501:
   Hyperbranch polymer (produced by Osaka Organic Chemical Industry, Ltd.)
BYK-UV3570:
   Polyester-modified silicone-containing surfactant (produced by BYK-Chemie Japan K.K.)
Irgacure 819:
   Photoradical polymerization initiator (produced by Ciba Specialty Chemicals K.K.)
Irgacure 369:
   Photoradical polymerization initiator (produced by Ciba Specialty Chemicals K.K.)
Irgacure 127:
   Photoradical polymerization initiator (produced by Ciba Specialty Chemicals K.K.)
Darocur EDB:
   Polymerization accelerator (produced by Ciba Specialty Chemicals K.K.)
Irgastab UV-10:
   Thermal radical polymerization inhibitor(produced by Ciba Specialty Chemicals K.K.)
V #1000:
   Viscoat #1000 (produced by Osaka Organic Chemical Industry, Ltd.)

### Printing Evaluation Method 1:

Using an ink set of respective achromatic inks above and an inkjet printer PM-G920 manufactured by Seiko Epson Corp., the Ink A species and the Ink B species were filled in the matte black line and the gloss optimizer line, respectively, and an image was printed at ordinary temperature and atmospheric pressure under the printing conditions of allowing the Ink A species to locate at the position corresponding to the image and the Ink B species to cover the entire image region. The recording medium used was an OHP film of A4 size (XEROX FILM <without frame>, produced by Fuji Xerox Co., Ltd.). The printing and curing treatments were then performed using an ultraviolet irradiation light source having an irradiation dose of 60 mW/cm² under the curing conditions such that the accumulated light quantity became the numerical value shown in the Table.

### Measuring Method of OD Value:

The measurement sample was disposed on photographic paper <KOTAKU> (Part No. KA450PSK) produced by Seiko Epson Corp., and the OD value in the black print part was measured using a spectrophotometric calorimeter, SPM-50, manufactured by Gretag-Macbeth.

### Measuring Method of L* Value:

The measurement sample was disposed on a black board having an OD value of 1.64, and the L* value in the white print part was measured using a spectrophotometric calorimeter, SPM-50, manufactured by Gretag-Macbeth.

The printing evaluation, L* value and the like of black ink, clear ink and white ink are shown in Tables 6 and 7.

**Table 6**

| | Ink A Species | Ink B Species | Ink Density of Printed Matter (wt%) | Film Thickness of Printed Matter (µm) | Accumulated Irradiation Dose Density Necessary for Curing (mJ/cm² ) | optical Density (OD value) | Curability |
|---|---|---|---|---|---|---|---|
| Example 1 | Black 1 | - | 6.0 | 18 | 10800 | 2.4 | A |
| Example 2 | Black 3 | Black 2 | 6.0 | 35 | 10800 | 2.5 | A |
| Example 3 | Black 3 | Clear 1 | 4.5 | 30 | 7500 | 2.2 | A |
| Example 4 | Black 1 | Black 3 | 7.5 | 18 | 14000 | 2.5 | A |
| Example 5 | Black 5 | - | 6.0 | 18 | 12600 | 2.5 | A |
| Comparative Example 1 | Black 4 | - | 6.0 | 18 | >14000 | - | C |
| Comparative Example 2 | Black 6 | - | 6.0 | 18 | >14000 | - | C |

**Table 7**

| | Ink A Species | Ink B Species | Ink Density of Printed Matter (Wt%) | Film Thickness of Printed Matter (µm) | Accumulated Irradiation Dose Necessary for Curing (mJ/cm²) | L* Value | curability |
|---|---|---|---|---|---|---|---|
| Example 6 | White 1 | - | 6.0 | 16 | 10800 | 59.2 | A |
| Example 7 | White 3 | White 2 | 6.0 | 34 | 10800 | 63.0 | A |
| Example 8 | White 3 | Clear 1 | 4.5 | 32 | 7500 | 58.7 | A |
| Example 9 | White 1 | White 3 | 7.5 | 19 | 14000 | 63.4 | A |
| Example 10 | White 5 | - | 6.0 | 17 | 11400 | 60.2 | A |
| Comparative Example 3 | White 4 | - | 6.0 | 17 | >14000 | - | C |
| Comparative Example 4 | White 6 | - | 6.0 | 17 | >14000 | - | C |

**Criteria of Curability:**

| | |
|---|---|
| A: | Sufficiently cured, a level of no practical problem. |
| B: | Partially cured, insufficient curability. |
| C: | Not cured at all. |

### Preparation of Yellow Ink Composition 1 (Y1) :

An yellow ink composition according to the following formulation was prepared. The preparation was performed as follows. 15 Parts by weight of C.I. Pigment Yellow 151, 5 parts by weight of polyoxyalkylene-added polyalkyleneamine (Discol N-518, produced by Dai-ichi Kogyo Seiyaku Co., Ltd.) as the dispersant and 80 parts by weight of ethylene glycol monoallyl ether (hereinafter simply referred to as AG) were mixed with stirring, and the resulting mixture was dispersed together with zirconia beads (diameter: 1.5 mm) by using a sand mill (manufactured by Yasukawa Seisakusho) for 6 hours. Thereafter, zirconia beads were separated by a separator to obtain Pigment Liquid Dispersion B.

Subsequently, similarly to Black Ink Composition 1, out of the blend components shown below, the solvent and various additives except for the pigment and dispersant were mixed and completely dissolved to prepare an ink solvent, and Pigment Liquid Dispersion B obtained above was gradually added dropwise to the ink solvent under stirring. After the completion of dropwise addition, these were mixed with stirring at ordinary temperature for 30 minutes, and the resulting mixture was filtered through a 5-µm membrane filter to prepare Yellow Ink Composition 1 shown in Table 8 below.

**Table 8**

| | Yellow Ink 1 (Y1) | Magenta Ink 1 (M1) | Cyan Ink 1 (C1) |
|---|---|---|---|
| Pigment | C.I. Yellow 151 | C.I. Violet 19 | C.I. Blue 15:3 |
| | 6.0 | 6.0 | 6.0 |
| N-518 | 2.0 | 2.0 | 2.0 |
| NVF | 25.0 | 25.0 | 25.0 |
| AG | 55.6 | 55.6 | 55.6 |
| STAR-501 | 10.0 | 10.0 | 10.0 |
| BYK-3570 | 0.2 | 0.2 | 0.2 |
| Darocur EDB | 1.0 | 1.0 | 1.0 |
| Irgastab UV-10 | 0.2 | 0.2 | 0.2 |

### Preparation of Magenta Ink Composition 1 (M1) and Cyan Ink Composition 1 (C1) :

Magenta Ink Composition 1 and Cyan Ink Composition 1 shown in Table 8 were prepared in the same manner as Yellow Ink Composition 1 (Y1).

### Preparation of Yellow Ink Composition 2 (Y2), Magenta Ink Composition 2 (M2) and Cyan Ink Composition 2 (C2):

Yellow Ink Composition 2, Magenta Ink Composition 2 and Cyan Ink Composition 2 each having the blend formulation shown in Table 9 below were prepared in the same manner as Yellow Ink Composition 1 (Y1).

### Preparation of Clear Ink Composition 2 (CL2):

Clear Ink Composition 2 according to the blend formulation shown in Table 10 below was prepared in the same manner as Clear Ink Composition 1 (CL1).

### Preparation of Yellow Ink Composition 3 (Y3), Magenta Ink Composition 3 (M3) and Cyan Ink Composition 3 (C3):

Yellow Ink Composition 3, Magenta Ink Composition 3 and Cyan Ink Composition 3 each having the blend formulation shown in Table 11 below were prepared in the same manner as Yellow Ink Composition 1 (Y1) except that Pigment Liquid Dispersion B containing a photoradical polymerization initiator, a dispersant and a pigment was previously prepared according to the blend formulation shown in Table 11 and after preparing an ink solvent by mixing and completely dissolving the solvent and various additives shown in Table 11 excluding the photoradical polymerization initiator, dispersant and pigment, Pigment Liquid Dispersion B was added and mixed thereto.

### Preparation of Clear Ink Composition 3 (CL3):

Clear Ink Composition 3 according to the blend formulation shown in Table 12 below was prepared in the same manner as Clear Ink Composition 1 (CL1) except for not using a photopolymerization initiator.

### Preparation of Light Magenta Ink Composition 1 (LM1), Light Cyan Ink Composition 1 (LC1), Red Ink Composition 1 (R1), Green Ink Composition 1 (GR1) and Orange Ink Composition 1 (OR1) :

Light Magenta Ink Composition 1, Light Cyan Composition 1, Red Ink Composition 1, Green Ink Composition 1 and Orange Ink Composition 1 each having the blend formulation shown in Table 13 below were prepared in the same manner as Yellow Ink Composition 1 (Y1).

### Preparation of Gray Ink Compositions 1 and 2 (G1 and G2):

Gray Ink Compositions 1 and 2 each having the blend formulation shown in Table 14 below were prepared in the same manner as Black Ink Composition 1 (Bk1).

**Table 9**

| | Yellow Ink 2 (Y2) | Magenta Ink 2 (M2) | Cyan Ink 2 (C2) |
|---|---|---|---|
| Pigment | C.I. Yellow 213 | C.I. Violet 19 | C.I. Blue 15:3 |
| | 5.0 | 6.0 | 4.0 |
| N-518 | 2.0 | 2.0 | 1.5 |
| AG | 67.6 | 66.6 | 69.1 |
| V #1000 | 25.0 | 25.0 | 25.0 |
| BYK-3570 | 0.2 | 0.2 | 0.2 |
| Irgastab UV-10 | 0.2 | 0.2 | 0.2 |

**Table 10**

| | Clear Ink 2 (CL2) |
|---|---|
| Pigment | - |
| N-518 | - |
| NVF | - |
| AG | 70.6 |
| V #1000 | 25.0 |
| BYK-3570 | 0.2 |
| Irgacure 819 | 3.2 |
| Irgacure 369 | - |
| Irgacure 127 | 0.8 |
| Darocur EDB | - |
| Irgastab UV-10 | 0.2 |

**Table 11**

| | Yellow Ink 3 (Y3) | Magenta Ink 3 (M3) | Cyan Ink 3 (C3) |
|---|---|---|---|
| Pigment | C.I. Yellow 213 | C.I. Violet 19 | C.I. Blue 15:3 |
| | 5.0 | 6.0 | 4.0 |
| N-518 | 2.0 | 2.0 | 1.5 |
| AG | 63.6 | 62.6 | 65.1 |
| V #1000 | 25.0 | 25.0 | 25.0 |
| BYK-3570 | 0.2 | 0.2 | 0.2 |
| Irgacure 819 | 3.2 | 3.2 | 3.2 |
| Irgacure 369 | 0.8 | 0.8 | 0.8 |
| Irgacure 127 | - | - | - |
| Irgastab UV-10 | 0.2 | 0.2 | 0.2 |

**Table 12**

| | Clear Ink 3 (CL3) |
|---|---|
| Pigment | - |
| N-518 | - |
| NVF | - |
| AG | 74.6 |
| V #1000 | 25.0 |
| BYK-3570 | 0.2 |
| Darocur EDB | - |
| Irgastab UV-10 | 0.2 |

**Table 13**

| | Light Magenta 1 (LM1) | Light Cyan 1 (LC1) | Red 1 (R1) | Green 1 (GR1) | Orange 1 (OR1) |
|---|---|---|---|---|---|
| Pigment 1 | C.I. Red 122 | C.I. Blue 15:3 | C.I. Red 177 | C.I. Green 7 | C.I. Orange 43 |
| | 1.0 | 1.0 | 3.0 | 3.0 | 3.0 |
| N-518 | 0.3 | 0.3 | 1.0 | 1.0 | 1.0 |
| AG | 70.3 | 70.3 | 70.6 | 70.6 | 70.6 |
| V #1000 | 28.0 | 28.0 | 25.0 | 25.0 | 25.0 |
| BYK-3570 | 0.2 | 0.2 | 0.2 | 0.2 | 0.2 |
| Irgastab UV-10 | 0.2 | 0.2 | 0.2 | 0.2 | 0.2 |

**Table 14**

| | Gray Ink 1 (G1) | Gray Ink 2 (G2) |
|---|---|---|
| Pigment | C.I. Black 7 | C.I. Black 7 |
| | 2.0 | 1.0 |
| N-518 | 1.0 | 0.5 |
| NVF | - | - |
| AG | 64.6 | 66.1 |
| V #1000 | 28.0 | 28.0 |
| BYK-3570 | 0.2 | 0.2 |
| Irgacure 819 | 3.2 | 3.2 |
| Irgacure 369 | - | - |
| Irgacure 127 | 0.8 | 0.8 |
| Darocur EDB | - | - |
| Irgastab UV-10 | 0.2 | 0.2 |

### Printing Evaluation Method 2:

Using each ink set and an inkjet printer PM-G920 manufactured by Seiko Epson Corp., a full color image was printed according to the ink arrangement shown in Table 15 at ordinary temperature and atmospheric pressure under the printing conditions of allowing the colorless transparent ink to land on respective positions corresponding to black, white and color inks. The recording medium used was an OHP film of A4 size (XEROX FILM <without frame>, produced by Fuji Xerox Co., Ltd.). The printing and curing treatments were then performed using an ultraviolet irradiation light source having an irradiation dose of 120 mW/cm² in total under the curing conditions of giving an accumulated light quantity of 14,400 mW/cm², and it was confirmed that a cured full color image was obtained.

**Table 15**

| Arrangement of Ink Compositions in PM-G920 | | | | | | | | | |
|---|---|---|---|---|---|---|---|---|---|
| | Line Y | Line M | Line C | Line Bk | Line MK | Line R | Line B | Line GO | Curability |
| Example 11 | Y1 | M1 | C1 | Bk1 | Bk1 | W1 | W1 | CL1 | A |
| Example 12 | Y2 | M2 | C2 | Bk5 | Bk5 | W5 | W5 | CL2 | A |
| Example 13 | Y2 | M2 | C2 | Bk5 | G1 | R1 | GR1 | CL2 | A |
| Example 14 | Y2 | M2 | C2 | Bk5 | G2 | R1 | GR1 | CL2 | A |
| Example 15 | Y2 | M2 | C2 | Bk5 | G1 | R1 | OR1 | CL2 | A |
| Example 16 | Y2 | M2 | C2 | Bk6 | Bk6 | W6 | W6 | CL2 | A |
| Example 17 | Y2 | M2 | C2 | Bk5 | G1 | LM1 | LC1 | CL2 | A |
| Example 18 | Y2 | LM1 | LC1 | Bk5 | G1 | R1 | GR1 | CL2 | A |
| Comparative Example 5 | Y3 | M3 | C3 | Bk6 | Bk6 | W6 | W6 | CL3 | B |
| Comparative Example 6 | Y2 | M2 | C2 | Bk6 | Bk6 | W6 | W6 | CL3 | C |
| Comparative Example 7 | Y3 | M3 | C3 | Bk1 | Bk1 | W1 | W1 | CL1 | B |

### Criteria of Curability:

A: Sufficiently cured in each of colors, a level of no practical problem.
B: Partially cured, insufficient curability.
C: Not cured at all in each of colors.

As apparent from the results above, the achromatic ink of the photocurable ink set of each of Examples according to the present invention was well and successfully usable in that the printed matter had a sufficiently high ink density, the L* value was excellent and satisfactory results were obtained in view of curability. Also, it was revealed that satisfactory curability and high-definition image are ensured by using the chromatic ink and achromatic ink of the photocurable ink set of each of Examples according to the present invention and these inks are well and successfully usable as a photocurable ink set.
While the present invention has been described in detail and with reference to specific embodiments thereof, it will be apparent to one skilled in the art that various changes and modifications can be made thereto without departing from the spirit and scope thereof.
This application is based on Japanese Patent Application Nos. 2006-225736 (filed August 22, 2006) and 2007-178979 (filed July 6, 2007) and the contents thereof are herein incorporated by reference.

## Claims

1. A photocurable ink set comprising a chromatic ink containing no photoradical polymerization initiator and an achromatic ink containing at least one photoradical polymerization initiator.

2. The photocurable ink set as claimed in claim 1, wherein the achromatic ink comprises a black ink, a white ink, a gray ink, a light black ink and a clear ink.

3. The photocurable ink set as claimed in claim 1 or 2, wherein the white ink comprises a hollow resin.

4. The photocurable ink set as claimed in any one of claims 1 to 3, wherein the chromatic ink comprises at least one ink selected from the group consisting of a yellow ink, a magenta ink, a cyan ink, a light yellow ink, a light magenta ink, a light cyan ink, a red ink, a green ink, a blue ink, an orange ink, a brown ink and a violet ink.

5. A printing method using the photocurable ink set claimed in any one of claims 1 to 4.

6. The printing method as claimed in claim 5, wherein the achromatic ink is cured singly.

7. The printing method as claimed in claim 5, wherein the achromatic ink is cured through mixing it with another achromatic ink.

8. The printing method as claimed in any one of claims 5 to 7, wherein the chromatic ink is cured through mixing it with the achromatic ink.

9. A printing apparatus using the photocurable ink set claimed in any one of claims 1 to 4.

10. A printed matter which is printed using the photocurable ink set claimed in any one of claim 1 to 4.
